# EUROPEAN PATENT SPECIFICATION

(11) **EP 1 390 660 B1**
(45) Date of publication and mention of the grant of the patent: **27.12.2006**
(21) Application number: 02723023.4
(22) Date of filing: 17.04.2002
(51) Int. Cl.: F17C 13/06, F17C 1/00

(54) **CONTAINER FOR PRESSURISED AIR**
BEHÄLTER FÜR DRUCKLUFT
RECIPIENT POUR AIR PRESSURISE

(30) Priority: 20.04.2001 SE 0101385
(43) Date of publication of application: 25.02.2004
(73) Proprietor: Scania CV AB (publ), 151 87 Södertälje (SE)
(72) Inventor: RYBLAD, Ake, S-152 57 Södertälje (SE)
(86) International application number: PCT/SE2002/000750
(87) International publication number: WO 2002/086380

(56) References cited:
- WO-A1-00/49330
- US-A- 2 500 119
- US-A- 5 494 188

## Description

### TECHNICAL FIELD

The present invention relates to a pressure container in accordance with the preamble to patent claim 1 and to a closure element in accordance with the preamble to patent claim 5.

### BACKGROUND

In the manufacture of pressure tanks, e.g. for compressed air systems in utility vehicles such as trucks or buses, weight reduction advantages are achieved by the tanks being made of composite material such as a thermoplastic in combination with a suitable reinforcing material, e.g. glass fibre. Such a pressure tank is known from document US-A-5 494 188. The process may involve what is known as bladder technology whereby a pressurised bladder is used for pressing the material against the inside of a female mould. Using composite material not only reduces the weight of the container itself but also creates the possibility of reducing the weight of the container's fastening devices.

A problem which arises with pressure containers of said type is being able during manufacture to provide them with closures which have good characteristics with regard to safety and rational manufacture.

### OBJECTS OF THE INVENTION

One object of the present invention is to provide a pressure container, made substantially of composite material, which has good characteristics with regard to product safety and rational manufacture.

A further object of the present invention is to provide a pressure container, substantially made of composite material, which makes it possible during manufacture for it to be provided with a closure which has good characteristics with regard to product safety and rational manufacture and at the same time makes it possible rationally to incorporate connections for the container which satisfy high product safety requirements.

### BRIEF DESCRIPTION OF THE INVENTION

The objects mentioned above are achieved with a pressure container and a closure element which exhibits the characterising features in patent claim 1 and 5.

The closure element may be fastened to the tank element by weld seams or mountings as described in more detail below. The closure element is arranged in such a way that when it is in a fitted position, one edge of it will be situated inside a rim which extends round the aperture of the tank element. This means that further safety is achieved in that if the fastening by weld seam or mountings fails, positive pressure in the tank will press the closure element against the inside of the rim of the aperture, resulting in the aperture being closed and the tank pressure being substantially maintained. In other words, upon failure of the fastening the closure element will be prevented from coming out of the tank element when the container is pressurised, and pressure will tend to increase the force applying the closure element to the tank element, thereby enhancing the mutual locking of the two elements.

Alternatively, the pressure tank may have no structural fastening in the form of a weld seam or mountings, in which case the abutting of the closure element against the inside of the tank element does itself serve as the primary structural connection between the two elements.

Preferably, the closure element is elongate in shape with its greatest extent along a first longitudinal axis and the aperture is also elongate in shape with its greatest extent along a second longitudinal axis. In such cases the first longitudinal axis is arranged to be substantially parallel with the second longitudinal axis when the closure element is in its fitted position. This makes it easy for the closure element to be fitted to the tank element by being introduced into the tank element through the aperture with the first longitudinal axis substantially perpendicular to the plane of the aperture, after which the closure element may be pivoted inside the tank element and applied to the inside of the rim of the aperture.

Preferably both the closure element and the aperture are oval in shape. This means that an O-ring joint can with advantage be used for sealing between the two elements, one of the sealing surfaces thus being situated on the closure element, the other on the inside of the tank element.

### DESCIPTION OF THE DRAWINGS

The invention is described in more detail below with reference to the accompanying drawings, in which:
- Fig. 1 is a sideview of a pressure container according to a preferred embodiment of the present invention,
- Fig. 2 is a view of the pressure container in Fig. 1 as seen in a direction indicated by the arrow II in Fig. 1,
- Fig. 3 is a view of the pressure container in Fig. 1 as seen in a direction indicated by the arrow III in Fig. 1,
- Fig. 4 is a partial sectional view along the line IV-IV in Fig. 2,
- Fig. 5 is a view of part of the pressure container in Fig. 1 as seen in a direction indicated by the arrow V in Fig. 4,
- Fig. 6 depicts a detail of Fig. 4, and
- Fig. 7 depicts a sectional view corresponding to the sectional view in Fig. 4 with an alternative embodiment of the invention.

### DETAILED DESCRIPTION

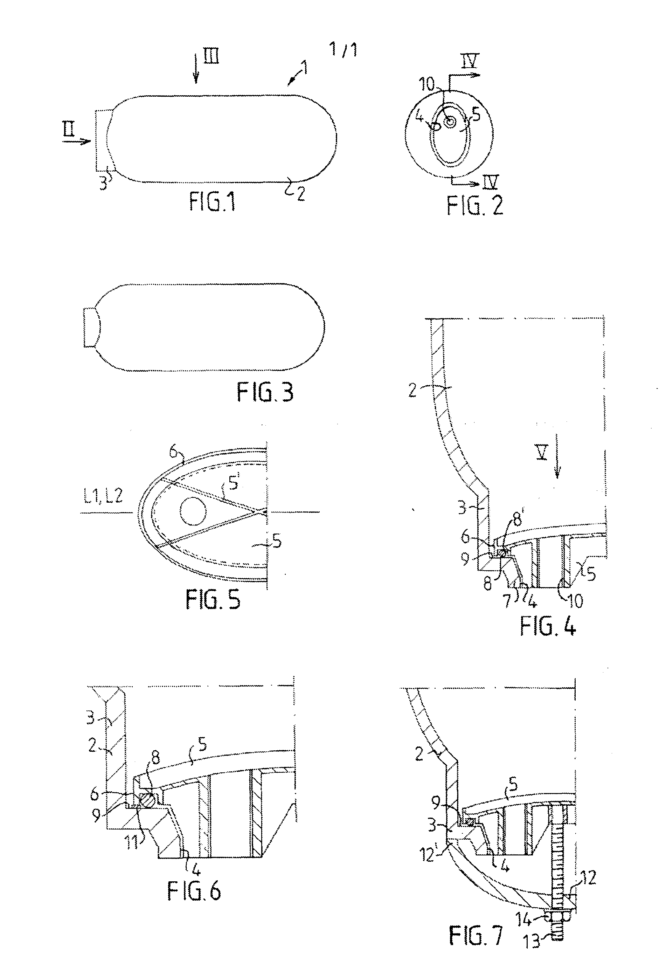

Fig. 1 depicts a pressure container 1 for a compressed air system, including an elongate tank element 2 to contain compressed air. The tank element 2 has a circular cross-section and each end of it is partially spherical in shape. Other cross-sectional shapes are of course possible. The end shape may correspond to variously sized portions of a sphere. Fig. 1 depicts a substantially hemispherical shape at the ends.

The tank element 2 incorporates at one end of the pressure container (the left end in Fig. 1) a neck 3 which extends a short distance in the longitudinal direction of the tank element. As may be seen in Fig. 2, the neck is oval in shape.

At the free end of the neck 3 the tank element has an aperture 4 with an oval rim which is closed by a likewise oval closure element 5. Alternatively the closure element 5 and the aperture 4 may be of some other shape, e.g. rectangular. To substantially facilitate, as described below, the fitting of the closure element to the tank element 2, both the latter and the aperture 4 are each preferably elongate in shape.

Alternatively the pressure container 1 may be provided with two or more apertures 4, e.g. a further aperture at the other end of the container 1.

The advantage of the closure element 5 being oval in shape is that the risk of stress concentrations is relatively slight in the fitted state of the closure element 5 when the tank 1 is pressurised. A rectangular shape of closure element involves greater risk of stress concentrations at its corners.

Fig. 4 shows the closure element 5 with an edge 6 of it arranged to be situated inside a rim 7 which extends round the aperture 4 of the tank element 2. The edge 6 of the closure element 5 may also be seen in Fig. 5, which is a view from inside the pressure container 1.

Fig. 4 shows an O-ring 8 for sealing, situated between the closure element 5 and a substantially planar contact surface 9 on the inside of the tank element 2. The O-ring 8 is preferably arranged to be situated in a recess 8' on the closure element 5. Alternatively, other types of seals may be used. The planar contact surface is made possible by the presence of the neck 3 on the tank element 2. An arrangement without this neck 3, whereby an elongate aperture was situated directly in the hemispherical part of the tank element 2, would result in a double-curve contact surface for the closure. This would be a disadvantage in rendering the pressure container difficult to process, partly because of requiring greater precision of manufacture, leading to more expensive manufacture or inferior product quality and product safety.

The neck 3 also performs the function of increasing the pressure container's rigidity at the aperture 4.

Referring to Fig.5, L1 denotes a first longitudinal axis which is identical with the longitudinal axis of the closure element 5, and L2 denotes a second longitudinal axis which is identical with the longitudinal axis of the aperture 4. As may be seen Fig. 5, the first longitudinal axis L1 is arranged to be substantially parallel with the second longitudinal axis L2 when the closure element 5 is in its fitted position.

As may also be seen in Fig. 5, the closure element 5 may be provided with supporting ribs 5' to give it rigidity in its transverse direction .

Fitting the closure element 5 involves introducing it into the tank element 2 via the aperture 4 with the first longitudinal axis L1 at an angle to the plane of the aperture 4, after which the closure element 5 may be pivoted inside the tank element 2 and be applied to the contact surface 8 (see Fig. 4).

Fig. 6 depicts a preferred arrangement for a structural connection between the tank element 2 and the closure element 5. A weld seam 11 is provided between the contact surface 9 and the portion of the edge 6 of the closure element 5 which is situated nearest to the aperture 4. In this case the respective plastics used in the tank element 2 and the closure element 5 need to be appropriately matched so that it is possible to join them together by welding. The weld seam 11 which extends round the whole aperture 4 may be created by vibration welding or ultrasonic welding.

Situating the weld seam 11 at the contact surface 9 means that positive pressure in the pressure container subjects the seam mainly to compressive stresses which from a strength point of view are preferable to tensile stresses. Alternatively the weld seam 11 may be situated on the other side of the O-ring 8 or between the edge 6 of the closure element 5 and the axially oriented inside surface of the neck 3. In the latter case the weld seam will be subjected mainly to shear stresses, which are likewise preferable to tensile stresses.

Fig. 7 shows an alternative arrangement for a structural connection between the tank element 2 and the closure element 5. An arcuate yoke 12 extends across the aperture 4 and has its ends 12' abutting against the free end of the neck 3. Two studbolts 13 (one of them visible in Fig. 7) are firmly fastened to the closure element 5 and extend substantially in the longitudinal direction of the pressure container 1. Each studbolt 13 is arranged to extend through a hole in the yoke, and a locknut 14 is arranged to be screwed onto the studbolt 13 so that the locknut 14 abutting against the yoke 12 draws the studbolt 13 and hence the closure element 5 in an outward direction relative to the tank element 2. The closure element 5 is thereby caused to abut against the contact surface 9 on the inside of the tank element 2 and is thus locked in position.

Alternatively two or more yokes 12 may be used, and a further possibility is that more than two studbolts 13 or only one may be used for each yoke 12.

As an alternative, the loadbearing function may be performed by the portion of the tank element 2 which is provided with the contact surface 9, as a result of the closure element 5 being caused to abut against it by positive pressure. In such an embodiment, any welding or mountings is/are not loadbearing and has/have only a securing function or functions.

The positive pressure which occurs in the pressure container 1 during use ensures that the closure element 5 is held stationary in the aperture of the tank element. The higher the pressure in the container, the greater becomes the force pressing the two elements together, while at the same time effective sealing is ensured by the O-ring.

The design of the closure means that an automated process can be used for fitting and welding.

As depicted in Figs. 2 and 4, the closure element may incorporate one or more connection devices 10 for compressed air, e.g. in the form of internally threaded holes. This embodiment of the invention affords the advantage of making it easy to incorporate two functions. This and the fact that the closure element can with advantage be designed for easy manufacture, e.g. by injection moulding, combine to allow significant manufacturing cost savings. In addition, different types of closure elements 5 may be produced with similar design for contact with the tank element but with differences in the number and design of connecting devices 10. The result is a very flexible system whereby the manufacturing process or finished products can easily be modified.

It was mentioned above that the pressure container described is intended for a compressed air system. However, the invention is not limited to such an application but concerns pressure containers in general which are suitable for various types of systems involving pressurised liquids or gases. The pressure container according to the invention is suitable for systems which are subject to high safety requirements, in which it is appropriate for relatively high pressures. The pressure container according to the invention may for example be used for an automatic gearbox in which the working fluid is hydraulic fluid. Another conceivable area of application is fuel storage in various types of fuel systems, e.g. LPG (liquid petroleum gas) systems, CNG (compressed natural gas) systems or hydrogen gas systems.

## Claims

1. A pressure container, e.g. in the form of a pressure tank 4 for compressed air systems in utility vehicles, which incorporates a tank element (2) which is arranged to enclose a space, whereby it has an inside and an outside, that the tank element (2) has at least one aperture (4), that a closure element (5) is arranged at each aperture (4), the closure element (5) being arranged so as in a fitted position to close the aperture (4), and that the closure element (5) is arranged so that an edge (6) of it is situated on the inside of the tank element and adjacent to a rim (7) which extends round the aperture (4) of the tank element (2), **characterised in that** the closure element (5) is elongate in shape, with its greatest extent along a first longitudinal axis (L1), that the aperture (4) is also elongate in shape, with its greatest extent along a second longitudinal axis (L2), and that the closure ele ment (5) is arranged in such a way that in the fitted position of the closure element the first longitudinal axis (L1) is substantially parallel with the second longitudinal axis (L2).

2. A pressure container according to claim 1, **characterised in that** both the closure element (5) and the aperture (4) are oval in shape.

3. A pressure container according claim 1 or 2, **characterised in that** the tank element (2) incorporates at each closure element (5) a neck (3) which protrudes from the remainder of the tank element (2), and the aperture (4) is arranged at the free end of the neck (3).

4. A pressure container according to any one of the foregoing claims, **characterised in that** a weld seam (11) between the closure element (5) and the tank element (2) is situated at the edge (6) of the closure element (5) and on the inside of the rim (7) of the tank element (2)

5. A closure element for a pressure container, e.g. a pressure tank for compressed air systems in utility vehicles, which incorporates a tank element (2), where the closure element it is arranged at an aperture (4) in the tank element (2) which is itself arranged to enclose a space and has an inside and an outside, the closure element is arranged so as in a fitted position to close the aperture (4) and that it has an edge (6) which is arranged to be situated on the inside of the tank element (2) and adjacent to a rim (7) which extends round the aperture (4) of the tank element (2), **characterised in that** it is elongate in shape, with its greatest extent along a first longitudinal axis (L1) and that in its fitted position it is arranged so that the longitudinal axis (L1) is substantially parallel with a second longitudinal axis (L2) which is defined by an elongate shape of the aperture (4).

6. A closure element according to claim 7, **characterised by** being oval in shape.

## Patentansprüche

1. Druckbehälter, beispielsweise in Form eines Drucktanks (4) für Druckluftsysteme in Nutzfahrzeugen, der ein Tankelement (2) umfasst, das dazu ausgebildet ist, einen Raum zu umschließen, wobei es eine Innenseite und eine Außenseite aufweist, wobei das Tankelement (2) wenigstens eine Öffnung (4) aufweist, wobei ein Verschlusselement (5) an jeder Öffnung (4) angeordnet ist, wobei das Verschlusselement (5) derart angeordnet ist, dass es in einer angebrachten Stellung die Öffnung (4) verschließt, und wobei das Verschlusselement (5) derart angeordnet ist, dass ein Rand (6) von diesem innerhalb des Tankelements und benachbart zu einem Ring (7) liegt, der sich um die Öffnung (4) des Tankelements (2) herum erstreckt,
**dadurch gekennzeichnet, dass** das Verschlusselement (5) längliche Form mit seiner größten Erstreckung entlang einer ersten Längsachse (L1) aufweist, dass die Öffnung (4) ebenfalls längliche Form mit ihrer größten Erstreckung entlang einer zweiten Längsachse (L2) aufweist, und dass das Verschlusselement (5) derart angeordnet ist, dass in der angebrachten Stellung des Verschlusselements die erste Längsachse (L1) im Wesentlichen parallel zu der zweiten Längsachse (L2) verläuft.

2. Druckbehälter nach Anspruch 1,
**dadurch gekennzeichnet, dass** sowohl das Verschlusselement (5) als auch die Öffnung (4) ovale Form aufweisen.

3. Druckbehälter nach Anspruch 1 oder 2,
**dadurch gekennzeichnet, dass** das Tankelement (2) an jedem Verschlusselement (5) einen Hals (3) aufweist, der von dem Rest des Tankelements (2) vorsteht, und dass die Öffnung (4) am freien Ende des Halses (3) angeordnet ist.

4. Druckbehälter nach einem der vorangehenden Ansprüche,
**dadurch gekennzeichnet, dass** eine Schweißnaht (11) zwischen dem Verschlusselement (5) und dem Tankelement (2) an dem Rand (6) des Verschlusselements (5) und an der Innenseite des Rands (7) des Tankelements (2) angeordnet ist.

5. Verschlusselement für einen Druckbehälter, beispielsweise einen Drucktank für Druckluftsysteme in Nutzfahrzeugen, welches ein Tankelement (2) umfasst, wobei das Verschlusselement an einer Öffnung (4) in dem Tankelement (2) angeordnet ist, weiches selbst derart ausgebildet ist, dass es einen Raum umschließt und dass es eine Innenseite und eine Außenseite aufweist, wobei das Verschlusselement derart ausgebildet ist, dass es in einer angebrachten Stellung die Öffnung (4) verschließt und dass es einen Rand (6) aufweist, der derart ausgebildet ist, dass er an der Innenseite des Tankelement (2) und benachbart zu einem Ring (7) angeordnet ist, der sich um die Öffnung (4) des Tankelements (2) herum erstreckt,
**dadurch gekennzeichnet, dass** es längliche Form mit seiner größten Erstreckung entlang einer ersten Längsachse (L1) aufweist und dass es in seiner angebrachten Stellung so angeordnet ist, dass die Längsachse (L1) im Wesentlichen parallel zu einer zweiten Längsachse (L2) verläuft, die durch eine längliche Form der Öffnung (4) definiert ist.

6. Verschlusselement nach Anspruch 7,
**dadurch gekennzeichnet, dass** es ovale Form aufweist.

## Revendications

1. Conteneur pressurisé, revêtant par exemple la forme d'un réservoir pressurisé 4 pour des systèmes à air comprimé dans des véhicules utilitaires, comprenant un élément de réservoir (2) agencé pour renfermer un espace, moyennant quoi il comporte un intérieur et un extérieur, l'élément de réservoir (2) comportant au moins une ouverture (4), un élément de fermeture (5) étant agencé au niveau de chaque ouverture (4), l'élément de fermeture (5) étant agencé de manière à être dans une position ajustée fermant l'ouverture (4) et l'élément de fermeture (5) étant agencé de manière à ce qu'un bord (6) de celui-ci soit situé à l'intérieur de l'élément de réservoir et à côté d'une bride (7) s'étendant autour de l'ouverture (4) de l'élément de réservoir (2), **caractérisé en ce que** l'élément de fermeture (5) a une forme allongée, sa plus grande partie étant située le long d'un premier axe longitudinal (L1), **en ce que** l'ouverture (4) a également une forme allongée, sa plus grande partie étant située le long d'un second axe longitudinal (L2) et **en ce que** l'élément de fermeture (5) est agencé de manière à ce que dans la position ajustée de l'élément de fermeture, le premier axe longitudinal (L1) soit sensiblement parallèle au second axe longitudinal (L2).

2. Conteneur pressurisé selon la revendication 1, **caractérisé en ce que** l'élément de fermeture (5) et l'ouverture (4) ont tous les deux une forme ovale.

3. Conteneur pressurisé selon la revendication 1 ou 2, **caractérisé en ce que** l'élément de réservoir (2) comporte au niveau de chaque élément de fermeture (5) un collet (3) faisant saillie du reste de l'élément de réservoir (2) et **en ce que** l'ouverture (4) est agencée au niveau de l'extrémité libre du collet (3).

4. Conteneur pressurisé selon l'une quelconque des revendications précédentes, **caractérisé en ce qu'**un joint de soudure (11) entre l'élément de fermeture (5) et l'élément de réservoir (2) est situé au niveau du bord (6) de l'élément de fermeture (5) et à l'intérieur de la bride (7) de l'élément de réservoir (2).

5. Elément de fermeture pour un conteneur pressurisé, par exemple un réservoir pressurisé pour des systèmes à air comprimé dans des véhicules utilitaires, comprenant un élément de réservoir (2), l'élément de fermeture étant agencé au niveau d'une ouverture (4) dans l'élément de réservoir (2), lui-même agencé de manière à renfermer un espace et comportant un intérieur et un extérieur, l'élément de fermeture étant agencé de manière à être dans une position ajustée fermant l'ouverture (4) dans une position installée et de manière à avoir un bord (6) agencé pour être situé à l'intérieur de l'élément de réservoir (2) et de manière adjacente à la bride (7) s'étendant autour de l'ouverture (4) de l'élément de réservoir (2), **caractérisé en ce qu'**il a une forme allongée, sa plus grande partie étant située le long d'un premier axe longitudinal (L1) et **en ce que**, dans sa position ajustée, il est agencé de manière à ce que l'axe longitudinal (L1) soit sensiblement parallèle au second axe longitudinal (L2) qui est défini par une forme allongée de l'ouverture (4).

6. Elément de fermeture selon la revendication 7, **caractérisé par le fait qu'**il a une forme ovale.
